# EUROPÄISCHE PATENTSCHRIFT

(11) **EP 2 036 798 B1**
(45) Veröffentlichungstag und Bekanntmachung des Hinweises auf die Patenterteilung: **23.12.2009**
(21) Anmeldenummer: 08105231.8
(22) Anmeldetag: 04.09.2008
(51) Int. Cl.: B61D 17/18, B60R 13/02

(54) **Verstärkungssystem für Seitenwandbekleidungen**
Reinforcement system for side wall cladding
Système de renforcement pour habillages de parois latérales

(30) Priorität: 15.09.2007 DE 202007012961 U
(43) Veröffentlichungstag der Anmeldung: 18.03.2009
(73) Patentinhaber: Lakowa Gesellschaft für Kunststoffbe- und -verarbeitung mbH, 02681 Wilthen (DE)
(72) Erfinder: Saring, Matthias, 02681 Schirgiswalde (DE); Liebscher, Ralf, 02633 Gaussig (DE)
(74) Vertreter: Sperling, Thomas

(56) Entgegenhaltungen:
- EP-A- 0 803 403
- BE-A- 384 588
- DE-C- 873 944
- US-A- 2 559 443
- US-A- 4 319 528

## Beschreibung

Die Erfindung betrifft ein Verstärkungssystem für Seitenwandbekleidungen, insbesondere für Schienen- und Nutzfahrzeuge.

Schienen- und Nutzfahrzeuge, wie zum Beispiel Straßenbahnen, werden mit Innenbekleidungen versehen. Besondere Aufmerksamkeit kommt dabei der Auslegung der Seitenwandbekleidungen zu. Diese Seitenwandbekleidungen sind meist unverstärkt bzw. aus ausreichend starkem Ausgangsmaterial.

Der Nachteil solcher Seitenwandbekleidungen besteht in der mangelnden Stabilität der Bauteile. Eine Alternative böte der vollflächige Einsatz eines stärkeren Ausgangsmaterials. Diesem Einsatz steht aber das dadurch entstehende höhere Gewicht entgegen.

Die Aufgabe der Erfindung besteht in der Stabilisierung des Bauteiles bei möglichst geringer Bauraumausnutzung.

Die Aufgabe der Erfindung wird durch ein Verstärkungssystem für Seitenwandbekleidungen, insbesondere für Schienen- und Nutzfahrzeuge gelöst, bei dem die Seitenwand zweischalig ausgeführt wird.

Dabei ist die Ansichtsseite Teil der äußeren Schale der zweischaligen Seitenwandbekleidung. Die Ansichtsseite ist eben ausgebildet und entspricht dem Innendesign der Innenbekleidung. Dagegen ist die innere Schale als rückseitiges Verstärkungsteil ausgebildet.

Erfindungsgemäß ist das rückseitige Verstärkungsteil mit einer Verstärkungsstruktur versehen.

Die Verstärkungsstruktur ist von einem im Wesentlichen rechteckigem Strukturrand mit einem oberen Strukturrandbereich, einem unteren Strukturrandbereich und zwei seitlichen Strukturrandbereichen umschlossen. Mindestens ein zum oberen Strukturrandbereich und zum unteren Strukturrandbereich paralleler, sich vom linken Strukturrandbereich bis zum rechten Strukturrandbereich erstreckender Querstreifen weist wechselseitig kurze lineare senkrecht zum Querstreifen orientierte Vorsprünge auf. Dabei liegen die Vorsprünge auf der dem oberen Strukturrandbereich abgewandten Seite jeweils mit gleichgerichteten Vorsprüngen des oberen Strukturrandbereiches auf einer gedachten Linie bzw. bilden zusammen eine unterbrochene Linie. Die Vorsprünge auf der dem oberen Strukturrand zugewandten Seite liegen jeweils mit gleichgerichteten Vorsprüngen des unteren Strukturrandbereiches auf einer gedachten Linie bzw. bilden ebenfalls eine unterbrochene Linie.

Vorteilhafterweise ragen die in eine Richtung orientierten Vorsprünge jeweils mittig bis in einen Zwischenraum, der durch entgegengesetzt orientierten Vorsprünge gebildet wird, hinein, ohne jedoch an den benachbarten Querstreifen bzw. Strukturrandbereich heranzureichen. Solche Zwischenräume können folgendermaßen gebildet werden:
- als Zwischenräume zwischen zwei zu den Vorsprüngen eines Querstreifens entgegengesetzt orientierten Vorsprüngen eines benachbarten parallelen Strukturrandbereiches oder
- als Zwischenräume zwischen einem seitlichen Strukturrandbereich und einem zu den Vorsprüngen eines Querstreifens entgegengesetzt orientierten, dem seitlichen Strukturrandbereich benachbarten Vorsprung eines parallelen Strukturrandbereiches oder
- als Zwischenräume zwischen zwei zu den Vorsprüngen eines Querstreifens oder zu den Vorsprüngen der zum Querstreifen parallelen Strukturrandbereiche entgegengesetzt orientierten Vorsprüngen eines benachbarten Querstreifens oder
- als Zwischenräume zwischen einem seitlichen Strukturrandbereich und einem zu den Vorsprüngen eines Querstreifens oder zu den Vorsprüngen der zum Querstreifen parallelen Strukturrandbereiche entgegengesetzt orientierten, dem Strukturrandbereich benachbarten Vorsprung eines benachbarten Querstreifens.

Die Verstärkungsstruktur ist vorzugsweise maximal 10 mm hoch und unterbricht bzw. unterbindet vorteilhaft alle denkbaren Biegelinien des Bauteils, was die Widerstandsfähigkeit gegenüber Durchbiegung erhöht. Zwischen jeweils zwei benachbarten Querstreifen oder zwischen einem Querstreifen und einem jeweils benachbarten parallelen Strukturrandbereich schlängelt sich der nicht erhöhte Flächenbereich der inneren Schale meanderförmig an den erhöhten Bereichen des Strukturrandes, der Querstreifen und der Vorsprünge entlang.

In einer besonders bevorzugten Ausgestaltung der Erfindung sind beide Teile, äußere Schale mit der Ansichtsseite und das rückseitige Verstärkungsteil mittels Klebetechnologie miteinander verbunden.

Der mit der Erfindung erzielbare Vorteil besteht in einer verbesserten Stabilität bei gleichzeitig geringerem Bauteilgewicht.

Weitere Einzelheiten, Merkmale und Vorteile der Erfindung ergeben sich aus der nachfolgenden Beschreibung von einem Ausführungsbeispiel mit Bezugnahme auf die zugehörige Zeichnung. Es zeigt:

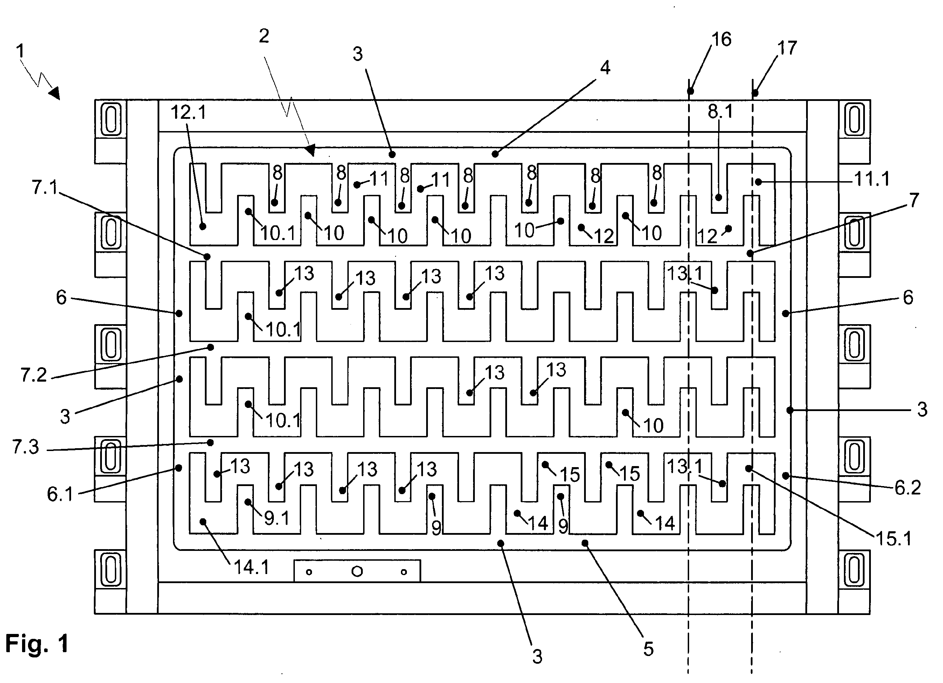

- **Fig. 1:**: die strukturierte innere Schale eines zweischaligen Seitenwandbekleidungsbauteils.

Die innere Schale eines Seitenwandbekleidungsbauteils 1 weist eine Struktur 2 auf. Die Verstärkungsstruktur 2 wird umschlossen von einem im Wesentlichen rechteckigen (an den Ecken abgerundeten) Strukturrand 3 mit einem oberen Strukturrandbereich 4, einem unteren Strukturrandbereich 5 und zwei seitlichen Strukturrandbereichen 6. Zu dem oberen Strukturrandbereich 4 und dem unteren Strukturrandbereich 5 parallel verlaufen Querstreifen 7, die sich vom linken Strukturrandbereich 6.1 bis zum rechten Strukturrandbereich 6.2 erstrecken. Gemäß **Fig. 1** gibt es insgesamt drei Querstreifen: einen zum oberen Strukturrandbereich benachbarten Querstreifen 7.1, einen mittleren Querstreifen 7.2 und einen zum unteren Strukturrandbereich 5 benachbarten Querstreifen 7.3. Der obere Strukturrandbereich 4 weist gemäß **Fig. 1** neun nach innen gerichtete Vorsprünge 8 in Form von kurzen senkrecht zu den Strukturrandbereichen 4 orientierten Streifen 8 auf. Der untere Strukturrandbereich 5 weist gemäß **Fig. 1** ebenfalls neun nach innen gerichtete Vorsprünge 9 in Form von kurzen senkrecht zu den Strukturrandbereich 5 orientierten Streifen 9 auf. Der dem oberen Strukturrandbereich 4 benachbarte parallele Querstreifen 7.1 weist ebenfalls Vorsprünge 10 auf, die entgegengesetzt zu den Vorsprüngen 8 orientiert sind und entweder in die Zwischenräume 11 zwischen jeweils zwei Vorsprüngen 8 des oberen Strukturrandbereiches 4 oder in den Zwischenraum 11.1 zwischen einem seitlichen Strukturrandbereich 6 und einem dem seitlichen Strukturrandbereich 6 benachbarten Vorsprung 8.1 des oberen Strukturrandbereiches 4 hineinragen. Ebenso ragen die Vorsprünge 8 des oberen Strukturrandbereiches 4 mittig in die Zwischenräume 12 zwischen zwei entgegengesetzt orientierten Vorsprüngen 10 des benachbarten parallelen Querstreifens 7.1 oder in den Zwischenraum 12.1 zwischen einem seitlichen Strukturrandbereich 6 und einem entgegengesetzt orientierten dem Strukturrandbereich 6 benachbarten Vorsprung 10.1 des Querstreifens 7.1 hinein, wobei die Vorsprünge 8 des oberen Strukturrandbereiches 4 und die Vorsprünge 10 des parallelen Querstreifens 7.1 parallel zueinander ausgerichtet sind. Der dem unteren Strukturrandbereich 5 benachbarte parallele Querstreifen 7.3 weist ebenfalls Vorsprünge 13 auf, die entgegengesetzt zu den Vorsprüngen 9 orientiert sind und entweder in die Zwischenräume 14 zwischen jeweils zwei benachbarten Vorsprüngen 9 des unteren Strukturrandbereiches 5 oder in den Zwischenraum 14.1 zwischen einem dem seitlichen Strukturrandbereich 6 und einem dem seitlichen Strukturrandbereich 6 benachbarten Vorsprung 9.1 des unteren Strukturrandbereiches 5 hineinragen. Ebenso ragen die Vorsprünge 9 des unteren Strukturrandbereiches 5 mittig in die Zwischenräume 15 zwischen zwei entgegengesetzt orientierten Vorsprüngen 13 des benachbarten parallelen Querstreifens 7.3 oder in den Zwischenraum 15.1 zwischen einem seitlichen Strukturrandbereich 6 und einem entgegengesetzt orientierten dem Strukturrandbereich 6 benachbarten Vorsprung 13.1 hinein, wobei die Vorsprünge 9 der Strukturrandbereiche und die Vorsprünge 13 des parallelen Querstreifens 7.3 parallel zueinander ausgerichtet sind.
Die Querstreifen 7.1, 7.2 und 7.3 sind jeweils beidseitig mit Vorsprüngen 10, 13 versehen. Die Ausrichtung der in regelmäßigen Abständen angeordneten Vorsprünge 10 und 13 ist dabei alternierend, so dass jeweils ein Vorsprung 10 auf der zum oberen Strukturrandbereich 4 orientierten Seite des Querstreifens 7.1, 7.2 und 7.3 mittig zwischen zwei entgegengesetzt ausgerichteten Vorsprüngen 13 der zum unteren Strukturrandbereich 5 gerichteten Seite des Querstreifens 7.1, 7.2 und 7.3 positioniert ist. Die Vorsprünge 8 des oberen Strukturrandbereiches 4, sowie jeweils ein vom oberen Strukturrandbereich 4 weg weisender Vorsprung 10 jedes Querstreifens 7.1, 7.2 und 7.3 sind entlang einer gedachten Linie 16 bzw. als eine unterbrochene Linie 16 gleichgerichtet angeordnet. Die Vorsprünge 9 des unteren Strukturrandbereiches 5, sowie jeweils ein Vorsprung 13 jedes Querstreifens 7.1, 7.2 und 7.3 sind ebenfalls entlang einer gedachten Linie 17 bzw. als eine unterbrochene Linie 17 gleichgerichtet angeordnet. Die unterbrochenen Linien 16, 17 sind, wie in **Fig. 1** gezeigt, in gleichen Abständen im Wechsel parallel angeordnet. Die in **Fig. 1** gezeigte Verstärkungsstruktur 1 ist maximal 10 mm hoch. Zwischen jeweils zwei benachbarten Querstreifen 7.1, 7.2; 7.2, 73 oder zwischen einem Querstreifen 7.1, 7.3 und einem jeweils benachbarten parallelen Strukturrandbereich 4, 5 schlängelt sich der nicht erhöhte Flächenbereich der inneren Schale 1 meanderförmig an den erhöhten Bereichen des Strukturrandes 3, der Querstreifen 7 und der Vorsprünge 8, 9, 10, 13 entlang. Die Verstärkungsstruktur 2 unterbricht bzw. unterbindet vorteilhaft alle denkbaren Biegelinien des Seitenwandbekleidungsbauteils, was die Widerstandsfähigkeit gegenüber Durchbiegung erhöht.

### LISTE DER BEZUGSZEICHEN

- 1: innere Schale des Seitenwandbekleidungsbauteil, rückseitiges Verstärkungsteil
- 2: Verstärkungsstruktur
- 3: Strukturrand
- 4: oberer Strukturrandbereich
- 5: unterer Strukturrandbereich
- 6: seitliche Strukturrandbereiche
- 6.1: linker Strukturrandbereich
- 6.2: rechter Strukturrandbereich
- 7: Querstreifen
- 7.1: Querstreifen (benachbart zum oberen Strukturrandbereich)
- 7.2: Querstreifen (mittlerer Querstreifen)
- 7.3: Querstreifen (benachbart zum unteren Strukturrandbereich)
- 8: Vorsprünge, Vorsprünge des oberen Strukturrandbereiches 4
- 8.1: Vorsprung, dem seitlichen Strukturrandbereich 6 benachbarter Vorsprung des oberen Strukturrandbereiches 4
- 9: Vorsprünge, Vorsprünge des unteren Strukturrandbereiches 5
- 9.1: dem seitlichen Strukturrandbereich 6 benachbarter Vorsprung des oberen Strukturrandbereiches 5
- 10: Vorsprünge, in Richtung des oberen Strukturrandbereiches 4 orientierte Vorsprünge der Querstreifen 7
- 11: Zwischenräume zwischen zwei benachbarten Vorsprüngen 8
- 11.1: Zwischenraum zwischen einem seitlichen Strukturrandbereich 6 und einem dem seitlichen Strukturrandbereich 6 benachbarten Vorsprung 8.1
- 12: Zwischenräume zwischen zwei benachbarten Vorsprüngen 10
- 12.1: Zwischenraum zwischen einem seitlichen Strukturrandbereich 6 und einem dem Strukturrandbereich 6 benachbarten Vorsprung 10.1

- 13: Vorsprünge, entgegengesetzt zu den Vorsprüngen 9 orientierte Vorsprünge der Querstreifen 7
- 13.1: dem Strukturrandbereich 6 benachbarter Vorsprung
- 14: Zwischenräume zwischen zwei benachbarten Vorsprüngen 9
- 14.1: Zwischenraum zwischen einem Vorsprung 9 und einem seitlichen Strukturrandbereich 6
- 15: Zwischenräume zwischen zwei Vorsprüngen 13
- 15.1: Zwischenraum zwischen einem Vorsprung 13.1 und einem seitlichen Strukturrandbereich 6
- 16: gedachte Linie, unterbrochene Linie
- 17: gedachte Linie, unterbrochene Linie

## Patentansprüche

1. Verstärkungssystem für Seitenwandbekleidungen, insbesondere für Schienen- und Nutzfahrzeuge, wobei die Seitenwandbekleidung zweischalig ausgeführt ist, wobei die Ansichtsseite als Teil der äußeren Schale der zweischaligen Seitenwandbekleidung gerade ausgebildet ist und dem Innendesign der Innenbekleidung entspricht, wohingegen die innere Schale (1) als rückseitiges Verstärkungsteil (1) ausgebildet ist, **dadurch gekennzeichnet, dass** das rückseitige Verstärkungsteil (1) mit einer Verstärkungsstruktur (2) versehen ist, die von einem im Wesentlichen rechteckigem Strukturrand (3) mit einem oberen Strukturrandbereich (4), einem unteren Strukturrandbereich (5) und zwei seitlichen Randbereichen (6) umschlossen wird, und mindestens ein zum oberen Strukturrandbereich (4) und zum unteren Strukturrandbereich (5) paralleler, sich vom linken Strukturrandbereich (6.1) bis zum rechten Strukturrandbereich (6.2) erstreckender Querstreifen (7) wechselseitig kurze lineare senkrecht zum Querstreifen (7) orientierte Vorsprünge (10, 13) aufweist, wobei die Vorsprünge (13) auf der dem oberen Strukturrandbereich (4) abgewandten Seite des mindestens einen Querstreifens (7) jeweils mit gleichgerichteten Vorsprüngen (8) des oberen Strukturrandbereiches (4) auf einer gedachten Linie (16) liegen und die Vorsprünge (10) auf der dem oberen Strukturrand (4) zugewandten Seite jeweils mit gleichgerichteten Vorsprüngen (9) des unteren Strukturrandbereiches (5) auf einer gedachten Linie (17) liegen.

2. Verstärkungssystem nach Anspruch 1, **dadurch gekennzeichnet, dass** die in eine Richtung orientierten Vorsprünge (8, 9, 10, 13) jeweils mittig bis in einen Zwischenraum aus einer Gruppe von Zwischenräumen (11,11.1,12,12.1, 14,14.1, 15, 15.1) hineinragen, wobei die Gruppe von Zwischenräumen aus folgenden unterschiedlichen Arten von Zwischenräumen besteht:
- Zwischenräume (11, 14) zwischen zwei zu Vorsprüngen (10, 13) eines Querstreifens (7.1, 7.3) entgegen gesetzt orientierten Vorsprüngen (8, 9) eines benachbarten parallelen Strukturrandbereiches (4, 5),
- Zwischenräume (11.1, 14.1) zwischen einem seitlichen Strukturrandbereich (6) und einem zu Vorsprüngen (10, 13) eines Querstreifens (7.1, 7.3) entgegengesetzt orientierten, dem seitlichen Strukturrandbereich (6) benachbarten Vorsprung (8.1, 9.1) eines zu den Querstreifen (7) parallelen Strukturrandbereiches (4, 5),
- Zwischenräume (12, 15) zwischen zwei zu Vorsprüngen (8, 9, 10, 13) der Strukturrandbereiche (4, 5) oder eines Querstreifens (7) entgegengesetzt orientierten Vorsprüngen (10, 13) eines benachbarten Querstreifens (7) und
- Zwischenräume (12.1, 15.1) zwischen einem seitlichen Strukturrandbereich (6) und einem zu Vorsprüngen (8, 9, 10, 13) der Strukturrandbereiche (4, 5) oder eines Querstreifens (7) entgegengesetzt orientierten, dem seitlichen Strukturrandbereich (6) benachbarten Vorsprung (10.1, 13.1) eines benachbarten Querstreifens (7).

3. Verstärkungssystem nach Anspruch 1 oder 2, **dadurch gekennzeichnet, dass** die Verstärkungsstruktur maximal 10 mm hoch ist.

4. Verstärkungssystem nach Anspruch 1 oder 2, **dadurch gekennzeichnet, dass** beide Teile, die äußere Schale mit der Ansichtsseite und das rückseitige Verstärkungsteil (1) mittels Klebetechnologie miteinander verbunden sind.

## Claims

1. A reinforcing system for sidewall linings, particularly for rail and utility vehicles, wherein the sidewall lining is realized in the form of a double-shell lining, wherein the visible side as part of the outer shell of the double-shell sidewall lining is realized straight and corresponds to the interior design of the inside lining while the inner shell (1) is realized in the form of a rear reinforcing part (1), **characterized in that** the rear reinforcing part (1) is provided with a reinforcing structure (2) that is enclosed by an essentially rectangular structural edge (3) with an upper structural edge region (4), a lower structural edge region (5) and two lateral edge regions (6) and at the least one cross strip (7) that extends from the left structural edge region (6.1) to the right structural edge region (6.2) parallel to the upper structural edge region (4) and the lower structural edge region (5) alternately features short linear projections (10, 13) that are oriented perpendicular to the cross strip (7), wherein the projections (13) on the side of the at least one cross strip (7) that faces away from the upper structural edge region (4) and identically directed projections (8) of the upper structural edge region (4) respectively lie on an imaginary line (16) and the projections (10) on the side that faces the upper structural edge (4) and identically directed projections (9) of the lower structural edge region (5) lie on an imaginary line (17).

2. The reinforcing system according to Claim 1, **characterized in that** the projections (8, 9, 10, 13) that are oriented in one direction respectively protrude centrally into an intermediate space of a group of intermediate spaces (11, 11.1, 12, 12.1, 14, 14.1, 15, 15.1), wherein the group of intermediate spaces consists of the following different types of intermediate spaces:
- intermediate spaces (11, 14) between two projections (8, 9) of an adjacent parallel structural edge (4, 5) that are oriented opposite to projections (10, 13) of a cross strip (7.1, 7.3),
- intermediate spaces (11.1, 14.1) between a lateral structural edge region (6) and a projection (8.1, 9.1) of a structural edge region (4, 5) that extends parallel to the cross strip (7), wherein said projection is oriented opposite to projections (10, 13) of a cross strip (7.1, 7.3) and situated adjacent to the lateral structural edge region (6),
- intermediate spaces (12, 15) between two projections (10, 13) of an adjacent cross strip (7) that are oriented opposite to projections (8, 9, 10, 13) of the structural edge regions (4, 5) or of a cross strip (7), and
- intermediate spaces (12.1, 15.1) between a lateral structural edge region (6) and a projection (10.1, 13.1) of an adjacent cross strip (7) that is oriented opposite to projections (8, 9, 10, 13) of the structural edge regions (4, 5) or of a cross strip (7) and situated adjacent to the lateral structural edge region (6).

3. The reinforcing system according to Claim 1 or 2, **characterized in that** the reinforcing structure has a maximum height of 10 mm.

4. The reinforcing system according to Claim 1 or 2, **characterized in that** both parts, namely the outer shell with the visible side and the rear reinforcing part (1), are connected to one another by means of adhesive technology.

## Revendications

1. Système de renfort pour des habillages de parois latérales, notamment pour des véhicules ferroviaires et utilitaires, l'habillage de parois latérales étant réalisé à double coque, la face de parement étant réalisée sous forme droite, en tant que partie de la coque extérieure de l'habillage à double coque des parois latérales et correspondant au design intérieur de l'habillage intérieur, alors que la coque intérieure (1) est réalisée en tant que pièce de renfort arrière (1), **caractérisé en ce que** la pièce de renfort arrière (1) est munie d'une structure de renfort (2) qui en entourée d'un bord de structure (3) sensiblement rectangulaire, avec une zone de bord supérieur de structure (4) et une zone de bord inférieur de structure (5) et avec deux zones de bord latéral de structure (6) et au moins une bande transversale (7) parallèle à la zone de bord supérieur de structure (4) et à la zone de bord inférieur de structure (5), s'étendant de la zone de bord gauche de structure (6.1) jusqu'à la zone de bord droit de structure (6.2) comporte sur des faces alternées des saillies (10, 13) linéaires courtes, orientées à la perpendiculaire de la bande transversale (7), sur la face de l'au moins une bande transversale (7) opposée à la zone de bord supérieur de structure (4), les saillies (13) se situant sur une ligne imaginaire (16), chaque fois avec des saillies (8) dirigées dans la même direction et sur la face dirigée vers le bord supérieur de structure (4), les saillies (10) se situant chaque fois avec des saillies (9) dirigées dans la même direction de la zone de bord inférieur de structure (5) sur une ligne imaginaire (17).

2. Système de renfort selon la revendication 1, **caractérisé en ce que** les saillies (8, 9, 10, 13) dirigées dans une direction saillissent chacune au centre jusque dans un intervalle parmi un groupe d'intervalles (11, 11.1, 12, 12.1, 14, 14.1, 15, 15.1), le groupe d'intervalles consistant dans les différents types suivants d'intervalles :
- intervalles (11, 14) entre deux saillies (8, 9) d'une zone de bord de structure (4, 5) parallèle voisine, orientées à l'opposée de saillies (10, 13) d'une bande transversale (7.1, 7.3),
- intervalles (11.1, 14.1) entre une zone latérale de bord de structure (6) et une saillie (8.1, 9.1) d'une zone de bord de structure (4, 5) parallèle aux bandes transversales (7), orientée à l'opposée de saillies (10, 13) d'une bande latérale (7.1, 7.3), voisine de la zone latérale de bord de structure (6).
- intervalles (12, 15) entre deux saillies (10, 13) d'une bande latérale voisine (7) orientées à l'opposée de saillies (8, 9, 10, 13) des zones de bords de structure (4, 5) ou d'une bande transversale (7) et
- intervalles (12.1, 15.1) entre une zone de bord latéral de structure (6) et une saillie (10.1, 13.1) d'une bande transversale voisine (7), voisine de la zone latérale de bord de structure (6), orientée à l'opposée de saillies (8, 9, 10, 13) des zones de bord de structure (4, 5) ou d'une bande transversale (7).

3. Système de renfort selon la revendication 1 ou 2, **caractérisé en ce que** la structure de renfort est haute d'un maximum de 10 mm.

4. Système de renfort selon la revendication 1 ou 2, **caractérisé en ce que** les deux parties, la coque extérieure avec la face de parement et la pièce de renfort arrière (1) sont reliées l'une à l'autre au moyen d'une technologie de collage.
